# EUROPÄISCHE PATENTSCHRIFT

(11) **EP 2 827 704 B1**
(45) Veröffentlichungstag und Bekanntmachung des Hinweises auf die Patenterteilung: **11.05.2016**
(21) Anmeldenummer: 13711394.0
(22) Anmeldetag: 22.03.2013
(51) Int. Cl.: A01J 5/00

(54) **VERFAHREN ZUM BETREIBEN EINER MELKANLAGE**
METHOD FOR OPERATING A MILKING PLANT
PROCÉDÉ DESTINÉ À FAIRE FONCTIONNER UNE INSTALLATION DE TRAITE

(30) Priorität: 22.03.2012 DE 102012005649
(43) Veröffentlichungstag der Anmeldung: 28.01.2015
(73) Patentinhaber: GEA Farm Technologies GmbH, 59199 Bönen (DE)
(72) Erfinder: UHLENBRUCK, Franz, 74889 Sinsheim (DE); SPOHR, Martin, 71570 Oppenweiler (DE)
(74) Vertreter: Neumann, Ditmar
(86) Internationale Anmeldenummer: PCT/EP2013/056029
(87) Internationale Veröffentlichungsnummer: WO 2013/139951

(56) Entgegenhaltungen:
- EP-A2- 1 621 073
- WO-A1-2007/060003
- WO-A2-02/052927
- DE-A1- 3 609 275

## Beschreibung

Der Gegenstand der Erfindung bezieht sich auf ein Verfahren zum Betreiben einer Melkanlage.

Solche Verfahren sind allgemein bekannt durch z.b. EP 1 621 073 A2, WO 02/052927 A2 und DE 36 09 275 A1.

Obwohl im Folgenden die Erfindung in Verbindung mit einer Melkanlage zum Melken von Kühen beschrieben wird, wird darauf hingewiesen, dass sich der Gegenstand der Erfindung, insbesondere auch auf Melkanlagen zum Melken von Schafen, Ziegen, Lamas, Kamelen, Dromedaren, Büffeln, Stuten, Eseln, Yaks sowie anderen Milch abgebenden Tieren eignet. Die Erfindung kann sowohl bei robotergestützten Melkanlagen als auch bei vollautomatischen, halbautomischen oder konventionellen Melkanlagen verwendet werden.

Ein Milchbetrieb weist zahlreiche Systeme auf, die für die Milchviehhaltung von Bedeutung sind. Eine Melkanlage kann eine Mehrzahl von Melkplätzen aufweisen, die jeweils mit einer Melkeinrichtung ausgerüstet sind. Die Melkeinrichtung weist wenigstens einen Melkbecher auf, der über einen langen Milchschlauch mit einer Milchtransportleitung verbunden ist. Es sind auch Einrichtungen bekannt, bei denen die Melkbecher über jeweils einen kurzen Milchschlauch mit einem Milchsammelbehälter verbunden sind, wobei der Milchsammelbehälter über einen langen Milchschlauch ggf. unter Zwischenschaltung eines Messbechers oder Messbehälters mit der Milchtransportleitung verbunden sind.

Melkanlagen werden unter vorgegebenen Betriebsbedingungen, bei denen es sich bspw. um das Melkvakuum, Taktfrequenz eines Pulsators handelt, betrieben. Es ist bekannt, dass eine Melkanlage mit bestimmten Betriebsparametern betrieben wird. Eine Prüfung der Melkanlage und deren Bauteile kann durch Messungen nach DIN/ISO 6690 erfolgen. Obwohl eine Melkanlagen innerhalb vorgegebener Betriebsparameter arbeitet, kann es zur Beeinträchtigung der Eutergesundheit, insbesondere der Zitzenkondition, kommen.

Es ist bekannt, dass negative Veränderungen an den Zitzenkuppen, insbesondere die Entstehung von Hyperkeratosen auch auf melktechnische Parameter zurückgeführt werden kann. In Abhängigkeit von den eingestellten melktechnischen Parametern kann es zu teigigen, blau-verfärbten Zitzen kommen.

Hiervon ausgehend liegt der vorliegenden Erfindung die Zielsetzung zugrunde, ein Verfahren zum Betreiben einer Melkanlage anzugeben, um eine verbesserte Zitzenkondition zu erreichen.

Diese Aufgabe wird gelöst durch ein Verfahren zum Betreiben einer Melkanlage mit den Merkmalen des Patentanspruchs 1. Weitere vorteilhafte Ausgestaltungen der Erfindung sind in den abhängig formulierten Patentansprüchen angegeben. Die in den Patentansprüchen einzeln aufgeführten Merkmale sind in beliebiger, technologisch sinnvoller, Weise miteinander kombinierbar und können durch erläuternde Sachverhalte aus der Beschreibung ergänzt werden, wobei weitere Ausführungsformen der Erfindung aufgezeigt werden.

Nach dem erfindungsgemäßen Verfahren zum Betreiben einer Melkanlage wird vorgeschlagen, dass für wenigstens ein Tier einer Herde während wenigstens eines Teils eines Melkvorgangs wenigstens einer der Parameter Drucksumme pro Zyklus, minimale Drucksumme pro Zyklus oder das Verhältnis von Saugsumme zur Drucksumme bestimmt und mit wenigstens einem Referenzwert verglichen wird.

Wird die Anlage gemäß dem Verfahren betrieben, so kann eine verbesserte Zitzenkondition des Tieres erreicht werden. Insbesondere ist festgestellt worden, dass bei einer solch betriebenen Anlage eine Verringerung der Vorkommen an Hyperkeratosen erreicht werden kann.

Unter dem Begriff Zyklus wird wenigstens ein Pulszyklus, vorzugsweise eine Mehrzahl von Pulszyklen während eines Melkvorgangs. verstanden.

Der Begriff Zyklus kann auch die Dauer einzelner Melkvorgänge oder auch sämtlicher Melkvorgänge während einer Laktationsperiode umfassen.

Im Folgenden wird der Begriff Zyklus im Zusammenhang mit einem Melkvorgang eines Tiers verwendet, ohne dass der Gegenstand der Erfindung hierdurch begrenzt wird.

Während eines Melkvorgangs werden die Verläufe der Vakua im Pulsraum wenigstens eines Melkbechers und im Melkbecherinnenraum gemessen. Die Messung kann mittelbar oder unmittelbar erfolgen. Bspw. kann der Vakuumverlauf im Pulsschlauch statt im Pulsraum des Melkbechers gemessen werden. Die Messung des Vakuums im Melkbecherinnenraum kann unmittelbar oder mittelbar erfolgen. Eine mittelbare Messung des Vakuumverlaufs im Melkbecherinnenraum kann dadurch erfolgen, dass der Vakuumverlauf im kurzen Milchschlauch, insbesondere benachbart zum Zitzengummi gemessen wird. Aus den ermittelten Vakuumverläufen im Puls- und Melkbecherinnenraum wird eine Differenzdruckkurve gebildet. Zur Bildung der Differenzdruckkurve pro Zyklus, insbesondere pro Pulszyklus werden zu den diskreten zeitlichen Messpunkten die zugehörigen Werte betrachtet und zwar in der Art und Weise, dass von dem Vakuum im Zitzengummi-Innenraum das Pulsraumvakuum subtrahiert wird. Hieraus folgt eine Differenzdruckkurve, die sich über die Dauer des Melkvorgangs, das heißt eines Zyklus, ändert.

Zur Bestimmung der tatsächlichen Druckbelastung einer Zitze wird ein Einfaltdruck des Zitzengummis bestimmt. Vorzugsweise wird der aktuell vorliegende Einfaltdruck des Zitzengummis bestimmt. Der Einfaltdruck des Zitzengummis ist die Druckdifferenz, die erforderlich ist, um das Zitzengummi so weit zu verformen, dass sich die gegenüberliegenden Seiten des Zitzengummischafts gerade berühren. Das Zitzengummi ist geöffnet, wenn der Differenzdruck kleiner als der Einfaltdruck des Zitzengummis ist. Man kann dann von einer Zitzengummi-Offenphase sprechen. In der Massagephase ist der Differenzdruck größer als der Einfaltdruck des Zitzengummis.

Wird der Verlauf der Druckdifferenz während eines Zyklus und der konstante Einfaltdruck in einem Diagramm dargestellt, so begrenzt die Differenzdruckkurve und die Einfaltdruckgerade eine Fläche. In Abhängigkeit von der Melkdauer und der während der Melkdauer erzeugten Anzahl von Pulszyklen durch einen Pulsator wird eine Mehrzahl der während der Zitzengummi-Geschlossenphase von der Differenzdruckkurve und der Einfaltdruckgerade eingeschlossenen Flächen ermittelt. Hieraus wird die Drucksumme pro Zyklus als Durchschnitt eines Melkvorgangs (Zyklusses) berechnet.

Aus den bekannten einzelnen Drucksummen pro Zyklus wird der geringste Wert der Drucksumme pro Zyklus während der gesamten Melkung ermittelt. Die minimale Drucksumme pro Zyklus stellt einen Parameter dar.

Der Parameter Saugsumme berücksichtigt die Wirkung des zitzenendigen Vakuums während der Zitzengummi-Offenphase. Die Zitzengummi-Offenphase liegt dann vor, wenn der Differenzdruck kleiner als der Einfaltdruck des Zitzengummis ist. Der Parameter Saugsumme pro Zyklus kann als Produkt des durchschnittlichen zitzenendigen Vakuums während der Zitzengummi-Offenphase und der Länge dieser Phase berechnet werden.

Die Messung der Vakua im Pulsraum und im Melkbecherinnenraum kann während eines gesamten Melkvorgangs oder innerhalb vorgegebener Abschnitte des Melkvorgangs erfolgen. Die Messung erfolgt vorzugsweise in einer Anfangs- und einer Endphase eines Melkvorgangs. Die aus den Messungen abgeleiteten Parameter liefern bereits aussagefähige Ergebnisse zur Bewertung der Melkanlage.

Wenigstens einer der Parameter wird mit einem vorgegebenen Referenzwert verglichen.

Die Drucksumme pro Zyklus kann als ein arithmetischer, geometrischer oder harmonischer Mittelwert berechnet werden. Dies kann auch für die Saugsumme durchgeführt werden.

Zur weiteren Verbesserung des Verfahrens wird vorgeschlagen, dass der Zyklus wenigstens einen Melkvorgang umfasst. Das Verfahren zum Betreiben einer Melkanlage kann auch eine Vielzahl von Tieren bzw. Melkvorgängen berücksichtigen. Durch entsprechende Anpassung der Melkparameter kann eine verbesserte Zitzenkondition und Eutergesundheit erreicht werden.

Eine Verbesserung der Zitzenkondition, insbesondere beim Vorliegen von Hyperkeratosen wird insbesondere dann erreicht, wenn die Melkanlage, insbesondere eine Melkanlage zum Melken von Kühen, so betrieben wird, dass der Referenzwert für den Parameter Drucksumme pro Zyklus zwischen 5 und 11 kPa*s, insbesondere zwischen 6,75 und 9 kPa*s liegt.

Gemäß einer noch weiteren vorteilhaften Ausgestaltung des Verfahrens wird vorgeschlagen, dass der Referenzwert für den Parameter minimale Drucksumme pro Zyklus zwischen 5 und 9 kPa*s, insbesondere zwischen 5,30 und 8,10 kPa*s liegt. Dieser Wertebereich ist insbesondere für Melkanlagen zum Melken von Kühen geeignet.

Die Melkanlage, insbesondere zum Melken von Kühen, sollte insbesondere so betrieben werden, dass der Referenzwert für das Verhältnis von Saugsumme zur Drucksumme zwischen 2 und 5, insbesondere zwischen 2,75 und 3,75 liegt. Wird die Anlage ggf. innerhalb eines Toleranzfelds um die vorbezeichneten Referenzwerte betrieben, wird das Vorkommen von Hyperkeratosen verringert.

Es ist festgestellt worden, dass die Parameter einen Einfluss auf die Zitzenkondition beschreiben. Zu niedrige Werte für die Drucksumme pro Zyklus führen häufig zu blau verfärbten Zitzen. Zu hohe Werte sind mit vermehrten Hyperkeratosen verbunden.

Das Verhältnis von Saugsumme zu Drucksumme steht in einer Korrelation zu Ödembildung. Das Ausmaß des durch den Unterdruck verursachten Zitzenkuppenödems erfordert eine angemessene Rückmassage der Ödemflüssigkeit. Eine Verlagerung des Verhältnisses aus dem günstigen Bereich zur vermehrten Vakuumapplikation oder vermehrter Zitzenkompression beeinträchtigt die Zitzenkuppenintegrität und fördert die Ausprägung von Hyperkeratosen. Die vergleichsweise engen Korrelationen dieser Parameter zur Ausprägung von Hyperkeratosen macht deutlich, dass die vakuumtechnischen Verhältnisse an der Zitzenkuppe nicht durch die nach DIN/ISO gemessenen Parameter wiedergegeben werden können. Einen wesentlichen Aspekt bildet der Einfaltdruck des Zitzengummis, der für die Druckwirkung an der Zitzenkuppe von Relevanz ist. In Abhängigkeit vom Ergebnis des Vergleichs wird der Einfaltdruck eines Zitzengummis verändert. Dies kann bspw. auch dadurch erfolgen, dass wenigstens ein Zitzengummi gegen ein anderes Zitzengummi mit anderen Materialeigenschaften oder Geometrien ausgetauscht wird.

In Abhängigkeit von wenigstens einem Vergleich wird wenigstens ein Betriebsparameter eines Pulsators verändert. Insbesondere kann die Taktzahl und/oder das Phasenverhältnis, insbesondere das Saugphasenverhältnis des Pulsators verändert werden.

Gemäß einem noch weiteren vorteilhaften Gedanken wird vorgeschlagen, dass in Abhängigkeit von wenigstens einem Vergleich mittelbar oder unmittelbar dieVakuumhöhe im Bereich der Zitzenenden im Melkbecher verändert wird.

Zusätzlich oder alternativ kann auch der Vakuumverlauf im Bereich der Zitzenenden im Melkbecher verändert werden.

Soweit dies möglich ist, können die Veränderungen, bspw. über die Taktzahl und das Saugphasenverhältnis des Pulsators während des Melkvorgangs erfolgen.

Weitere Einzelheiten und Vorteile der Erfindung werden anhand der in der Zeichnung dargestellten Figuren erläutert. Es zeigen:
- Fig. 1:: ein Diagramm der Druckverläufe,
- Fig. 2:: ein Diagramm mit Drucksumme pro Zyklus, und
- Fig. 3:: ein Diagramm mit Saugsumme pro Zyklus.

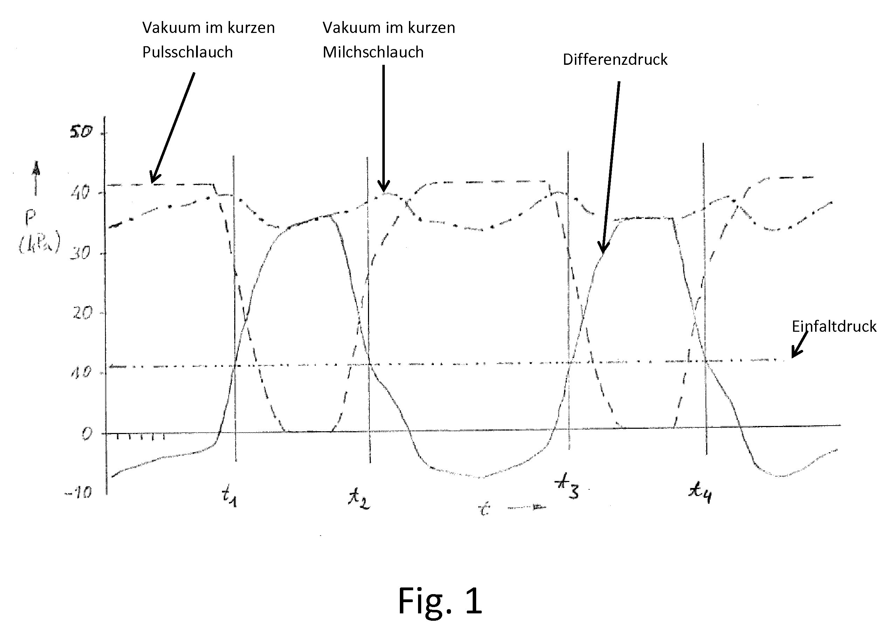

Fig. 1 zeigt ein Diagramm der relevanten Druckverläufe während eines Zyklus, der mehrere Pulszyklen umfasst. Gestrichelt ist der Verlauf des Vakuums im kurzen Pulsschlauch. Den Verlauf des Vakuums im kurzen Milchschlauch über die Zeit t gibt die strichpunktierte Linie wieder. Aus dem Verlauf des Vakuums im kurzen Milchschlauch ist erkennbar, dass das Vakuum zwischen ca. 35 kPa und 40 kPa schwankt. Zu jedem Zeitpunkt wird der Differenzdruck zwischen dem Vakuum im kurzen Milchschlauch und dem Vakuum im kurzen Pulsschlauch bestimmt. Dieser Differenzdruck ist als Kurve in der Fig. 1 dargestellt. In dem Bereich, in dem das Vakuum im kurzen Pulsschlauch 0 ist, entspricht der Verlauf des Differenzdrucks dem des Vakuums im kurzen Milchschlauch. Der Druckverlauf im kurzen Milchschlauch sollte benachbart zum Zitzenende gemessen werden. Der Verlauf des Differenzdrucks ist in der Fig. 1 als durchgezogenen Line dargestellt.

Fig. 1 zeigt auch den Einfaltdruckwert des Zitzengummis, der in dem dargestellten Beispiel bei ca. 11 kPa liegt. Der Einfaltdruck ist zeitunabhängig. Er ist konstant. In der Fig. ist er als Strich-Punkt-Punkt dargestellt.

Aus der Darstellung nach Fig. 1 ist erkennbar, dass zu den Zeitpunkten t₁, t₂, t₃ und t₄ die Differenzdruckkurve und der Einfaltdruck des Zitzengummis Schnittpunkte aufweisen.

Der Einfaltdruck des Zitzengummis ist die Druckdifferenz, die erforderlich ist, um den Zitzengummi soweit zu verformen, dass sich die gegenüberliegenden Seiten des Zitzengummischafts gerade berühren. Nach dieser Definition ist der Zitzengummi dann geöffnet, wenn der Differenzdruck kleiner als der Einfaltdruck des Zitzengummis ist. In der Zeitspanne zwischen t₂ und t₃ ist das Zitzengummi geöffnet.

In den Zeitspannen t₁ bis t₂ und t₃ bis t₄ ist das Zitzengummi geschlossen.

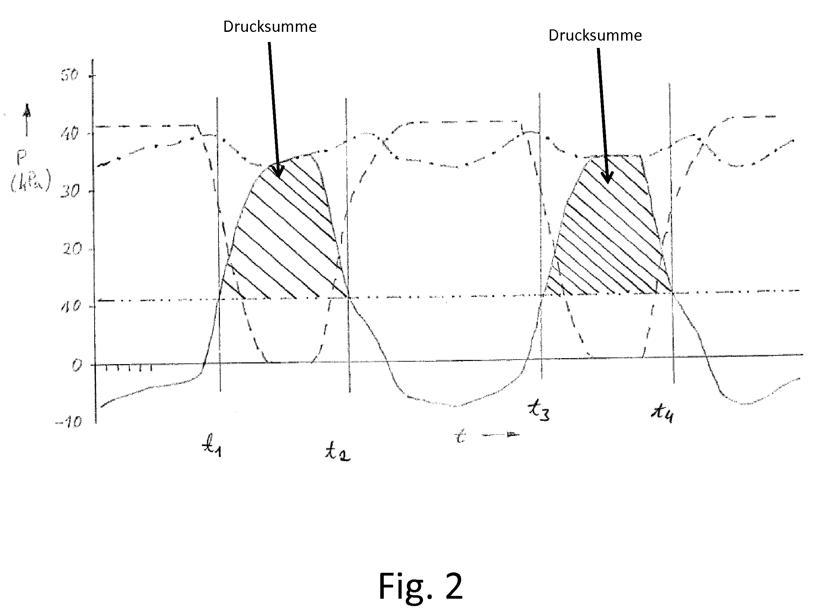

Fig. 2 zeigt das Diagramm nach Fig. 1 ergänzt um den Parameter Drucksumme pro Zyklus, der als schraffierte Fläche dargestellt ist. Die Drucksumme pro Zyklus entspricht der schraffiert dargestellten Fläche nach Fig. 2 und der durch den Verlauf des Differenzdrucks für die Dauer des geschlossenen Zitzengummis. Die Drucksumme pro Zyklus kann als Mittelwert während eines Melkvorgangs bestimmt werden.

Aus den so ermittelten Drucksummen pro Zyklus kann auch die geringste Drucksumme pro Zyklus abgeleitet werden.

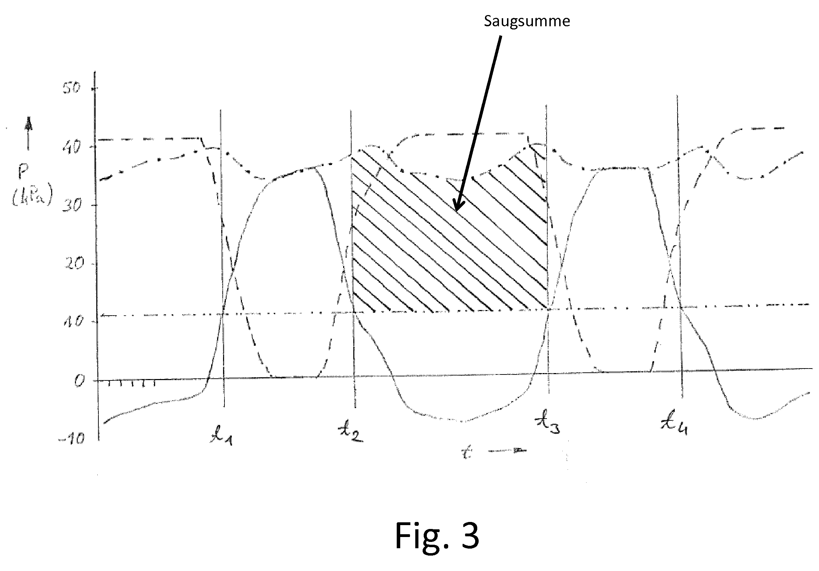

Fig. 3 zeigt ein Diagramm, in dem die Druckverläufe entsprechend dem Diagramm nach Fig. 1 bzw. 2 dargestellt sind. Schraffiert ist eine Fläche in der Fig. 3, die zwischen den Zeitpunkten t₂ und t₃ liegt und durch den Nullwert (Nullwert ist der Wert, bei dem der Druck null kPa beträgt) sowie den Druck im kurzen Milchschlauch begrenzt ist. Diese Fläche bildet die Saugsumme pro Zyklus und kann bspw. durch Integralbildung ermittelt werden.

Aus den so ermittelten Parametern Drucksumme pro Zyklus, geringste Drucksumme pro Zyklus und das Verhältnis von Saugsumme zu Drucksumme werden Parameter bereitgestellt, die mit Referenzwerten verglichen werden können. Liegen die Parameter außerhalb eines Toleranzfelds, so kann angenommen werden, dass die Melkanlage nicht in einem optimalen Zustand arbeitet, was sich bspw. in der Bildung von Hyperkeratosen widerspiegeln kann. Die einzelnen Komponenten oder Verläufe der Vakua können so gesteuert oder eingeregelt werden, dass die Melkanlage vorzugsweise innerhalb eines Toleranzfelds um die Referenzwerte arbeitet, was eine positive Auswirkung auf die Zitzenkondititon hat.

Die Anpassung der Melkanlage kann während des Melkvorgangs erfolgen. Insbesondere können Veränderungen von Betriebsvakuum der Melkanlage wie auch Pulsatoreinstellungen automatisch abgeleitet und automatisch gesteuert oder geregelt werden. Dies ist jedoch nicht zwingend notwendig. Eine Anpassung der Betriebsparameter, insbesondere des Betriebsvakuums und der Pulsatoreinstellungen der Melkanlage kann auch tierindividuell erfolgen.

Es sind Untersuchungen in ca. 30 Herden durchgeführt worden, wobei die untersuchten Herden Schwarzbunt, Rotbunt und HF Kühen umfassten. Es bestanden schwach signifikante positive Korrelationen zum Anlagenvakuum (r=0,459) und zum maximalen Differenzdruck in der Massagephase (r=0,366). Die stärkste Beziehung zur Häufigkeit von verhornten Hyperkeratosen in der Herde hatten die Parameter "Drucksumme pro Zyklus", "geringste Drucksumme pro Zyklus" und das "Verhältnis von Saugsumme zu Drucksumme". Alle drei Parameter zeigten eine quadratische Beziehung.

| | Korrelationskoeffizient r | Bevorzugter Bereich |
|---|---|---|
| Drucksumme pro Zyklus | 0,760 | 6,75 - 9,00 kPa*s |
| Geringste Drucksumme pro Zyklus | 0,746 | 5,30 - 8,10 kPa*s |
| Saugsumme pro Drucksumme | 0,616 | 2,75 - 3,75 |

Für alle drei Parameter lassen sich sowohl bevorzugte Bereiche erkennen, als auch Bereiche mit zu starker oder zu geringer Druckwirkung des Zitzengummis. Bei zu starker Druckwirkung reagiert das Zitzengewebe mit einer verstärkten Hornhautbildung ("Schwiele"). Bei zu geringer Druckwirkung schwillt die Zitze an (Ödem) und die andauernde Aktion des Zitzengummis auf dieser angeschwollenen Zitze verursacht zahlreiche Läsionen, die zu Entzündungen und anschließend zu Narbengewebe führen.Desweiteren ist eine Untersuchung der Veränderung der Strichkanalkondition in einem Betrieb mit einer herdenweiten schlechten Strichkanalkondition (28% der Kühe hatte ein Hyperkeratose der Klasse III und IV) durchgeführt worden. Die Klassifikation der Hyperkeratose erfolgte nach "Methods for Evaluating Teat Condition Recommended by the Teat Club International". Die untersuchte Herde umfasste 60 laktierende schwarzbunten Kühe, die in einem Fischgrät Melkstand 2x6 mit tiefverlegter Melkleitung und automatischer Abnahme bei einem Anlagevakuum 42,7kPa und einem Einfaltdruck des Zitzengummis von 7,7kPa gemolken worden sind. Die Messungen der Druckverläufe erfolgte als simultane 2-Kanalmessung mit einer Messfrequenz von 30Hz. Es wurde immer an einem Vorderviertel gemessen. Die Messung begann nach Ende der automatischen Stimulation und endete im Moment der automatischen Abnahme. Die nachstehende Tabelle gibt die Messungen und die Veränderungen der Hyperkeratose-Klasse wieder.

| | 1. Messung: Tag 0 | 2. Messung: Tag5 | 3. Messung Tag 49 |
|---|---|---|---|
| Anlagevakuum (kPa) | 42,7 | 40,1 | 40,1 |
| Einfaltdruck (kPA) | 7,7 | 13,3 | 13,0 |
| Drucksumme pro Zyklus | 10,63 | 7,52 | 6,85 |
| Saugsumme pro Zyklus | 21,56 | 22,27 | 20,67 |
| Drucksumme/ Saugsumme | 1,99 | 2,96 | 3,03 |
| Hyperkeratose Klasse I | 25% | 27% | 39% |
| Hyperkeratose Klasse II | 47% | 40% | 47% |
| Hyperkeratose Klasse III | 20% | 25% | 12% |
| Hyperkeratose Klasse IV | 8% | 8% | 2% |

Zur Verbesserung der Melkbedingungen erfolgte ein Wechsel der Zitzengummis (Erhöhung des Einfaltdrucks von 7,7kPa auf 13,3kPa). Die Erhöhung des Einfaltdrucks führte zu einer Absenkung des Parameters Drucksumme pro Zyklus. Ein "härteres" Zitzengummi schließt später, öffnet früher und übt im voll kollabierten Zustand weniger Druck auf die Zitze aus.

Das Anlagenvakuum ist im gleichen Zeitraum von 42,7 auf 40,1kPa abgesenkt worden. Diese Änderung beeinflusst ebenso den Wert der Drucksumme pro Zyklus. Nach theoretischen Berechnungen, wäre, bei gleicher Vakuumhöhe, eine Drucksumme pro Zyklus von 8,36kPa erwartet worden. Es kann daher die Schlussfolgerung gezogen werden, dass das Reduzieren des Vakuums der Anlag um 2,6kPa, eine Reduzierung der Drucksumme pro Zyklus um 1kPa*sec (30% weniger) zur Folge hat. Eine zeitliche Verkürzung der Entlastungsphase (von 200ms auf 100ms) erhöht geringfügig den Wert der Saugsumme pro Zyklus. Die Ergebnisse in der Tabelle zeigen, dass sich die Strichkanalkondition der Tiere in der Herde innerhalb des Versuchszeitraums deutlich verbessert hat. Nur noch 14 % der Tiere hatte eine Hyperkeratose der Klassen III und IV.

## Patentansprüche

1. Verfahren zum Betreiben einer Melkanlage, bei dem für wenigstens ein Tier einer Herde während wenigstens eines Teils eines Melkvorgangs wenigstens ein Parameter bestimmt und
mit wenigstens einem Referenzwert verglichen wird,
**dadurch gekennzeichnet, dass**
der Parameter die Drucksumme pro Zyklus, die minimale Drucksumme pro Zyklus oder das Verhältnis von Saugsumme zu Drucksumme ist.

2. Verfahren nach Anspruch 1, bei dem die Drucksumme pro Zyklus ein arithmetischer, geometrischer oder harmonischer Mittelwert ist.

3. Verfahren nach Anspruch 1 oder 2, bei dem der Zyklus wenigstens einen Melkvorgang umfasst.

4. Verfahren nach Anspruch 1, 2 oder 3, bei dem der Referenzwert für den Parameter Drucksumme pro Zyklus zwischen 5 und 11 kPa*s, insbesondere zwischen 6,75 und 9 kPa*s liegt.

5. Verfahren nach einem der Ansprüche 1 bis 4, bei dem der Referenzwert für den Parameter minimale Drucksumme pro Zyklus zwischen 5 und 9 kPa*s, insbesondere zwischen 5,30 und 8,10 kPa*s liegt.

6. Verfahren nach einem der Ansprüche 1 bis 5, bei dem der Referenzwert für das Verhältnis von Saugsumme zu Drucksumme zwischen 2 und 5, insbesondere zwischen 2,75 und 3,75 liegt.

7. Verfahren nach einem der Ansprüche 1 bis 6, bei dem in Abhängigkeit von wenigstens einem Vergleich ein Einfaltdruck wenigstens eines Zitzengummis verändert wird.

8. Verfahren nach einem der Ansprüche 1 bis 7, bei dem in Abhängigkeit von wenigstens einem Vergleich wenigstens ein Betriebsparameter eines Pulsators verändert wird.

9. Verfahren nach einem der Ansprüche 1 bis 8, bei dem in Abhängigkeit von wenigstens einem Vergleich mittelbar oder unmittelbar eine Vakuumhöhe im Bereich eines Zitzenendes im Melkbecher verändert wird.

10. Verfahren nach einem der Ansprüche 1 bis 9, bei dem in Abhängigkeit von wenigstens einem Vergleich mittelbar oder unmittelbar der Vakuumverlauf im Bereich eines Zitzenendes im Melkbecher verändert wird.

## Claims

1. A method for operating a milking system, in which for at least one animal of a herd during at least one part of the milking process is at least one parameter determined and compared with at least one reference value, **characterized in that** the parameter is the total pressure per cycle, minimum total pressure per cycle or the ratio of total suction to total pressure.

2. The method as claimed in claim 1, in which the total pressure per cycle is an arithmetic, geometric or harmonic mean value.

3. The method as claimed in claim 1 or 2, in which the cycle comprises at least one milking process.

4. The method as claimed in claim 1, 2 or 3, in which the reference value for the parameter total pressure per cycle lies between 5 and 11 kPa*s, in particular between 6.75 and 9 kPa*s.

5. The method as claimed in one of claims 1 to 4, in which the reference value for the parameter minimum total pressure per cycle lies between 5 and 9 kPa*s, in particular between 5.30 and 8.10 kPa*s.

6. The method as claimed in one of claims 1 to 5, in which the reference value for the ratio of total suction to total pressure lies between 2 and 5, in particular between 2.75 and 3.75.

7. The method as claimed one of claims 1 to 6, in which, depending on at least one comparison, a fold-in pressure of at least one teat liner is changed.

8. The method as claimed in one of claims 1 to 7, in which, depending on at least one comparison, at least one operating parameter of a pulsator is changed.

9. The method as claimed in one of claims 1 to 8, in which, depending on at least one comparison, a level of vacuum in the area of a teat end in the milking cup is changed, indirectly or directly.

10. The method as claimed in one of claims 1 to 9, in which, depending on at least one comparison, the variation of the vacuum in the area of a teat end in the milking cup is changed, indirectly or directly.

## Revendications

1. Procédé de mise en fonctionnement d'une installation de traite, dans lequel, pour au moins un animal d'un troupeau, pendant au moins une partie d'un processus de traite, au moins un paramètre est déterminé et est comparé à au moins une valeur de référence, **caractérisé en ce que** le paramètre est le cumul de pression par cycle, le cumul de pression minimum par cycle ou le rapport du cumul d'aspiration au cumul de pression.

2. Procédé selon la revendication 1, dans lequel le cumul de pression par cycle est une valeur moyenne arithmétique, géométrique ou harmonique.

3. Procédé selon la revendication 1 ou 2, dans lequel le cycle comprend au moins un processus de traite.

4. Procédé selon la revendication 1, 2 ou 3, dans lequel la valeur de référence pour le paramètre de cumul de pression par cycle se situe entre 5 et 11 kPa*s, notamment entre 6,75 et 9 kPa*s.

5. Procédé selon l'une quelconque des revendications 1 à 4, dans lequel la valeur de référence pour le paramètre de cumul de pression minimum par cycle se situe entre 5 et 9 kPa*s, notamment entre 5,30 et 8,10 kPa*s.

6. Procédé selon l'une quelconque des revendications 1 à 5, dans lequel la valeur de référence pour le rapport du cumul d'aspiration au cumul de pression se situe entre 2 et 5, notamment entre 2,75 et 3,75.

7. Procédé selon l'une quelconque des revendications 1 à 6, dans lequel une pression de compression d'au moins un manchon-trayeur est modifié en fonction d'au moins une comparaison.

8. Procédé selon l'une quelconque des revendications 1 à 7, dans lequel au moins un paramètre de fonctionnement d'un pulsateur est modifié en fonction d'au moins une comparaison.

9. Procédé selon l'une quelconque des revendications 1 à 8, dans lequel un niveau de vide est indirectement ou directement modifié dans la région d'un manchon-trayeur dans un gobelet trayeur en fonction d'au moins une comparaison.

10. Procédé selon l'une quelconque des revendications 1 à 9, dans lequel l'évolution du vide dans la région d'un manchon-trayeur dans le gobelet trayeur est indirectement ou directement modifiée en fonction d'au moins une comparaison.
